# EUROPÄISCHE PATENTSCHRIFT

(11) **EP 3 428 891 B1**
(45) Veröffentlichungstag und Bekanntmachung des Hinweises auf die Patenterteilung: **23.11.2022**
(21) Anmeldenummer: 18182882.3
(22) Anmeldetag: 11.07.2018
(51) Int. Cl.: G07C 9/00, G08C 17/02, B60R 25/24

(54) **SYSTEM MIT TÜR, TÜRSCHLOSS UND FUNKSCHLÜSSEL**
SYSTEM WITH DOOR, DOOR LOCK AND RF KEY
SYSTÈME POURVU DE PORTE, SERRURE DE PORTE ET CLÉ À RADIO

(30) Priorität: 13.07.2017 DE 102017115816
(43) Veröffentlichungstag der Anmeldung: 16.01.2019
(73) Patentinhaber: Witte Automotive GmbH, 42551 Velbert (DE)
(72) Erfinder: Ducka, Radec, 43111 Jirkov (CZ); Marcel, Derian, 14700 Prague 4 (CZ)
(74) Vertreter: Manitz Finsterwald Patent- und Rechtsanwaltspartnerschaft mbB

(56) Entgegenhaltungen:
- DE-A1- 10 064 141
- DE-A1-102014 009 451
- DE-A1-102015 206 009
- DE-A1-102015 213 934
- DE-A1-102015 222 235
- DE-A1-102016 216 053
- US-A1- 2015 048 927

## Beschreibung

Die Erfindung betrifft ein System umfassend eine Tür, insbesondere eines Fahrzeugs, mit einem Türschloss, ein Türsteuerungsmodul, welches eine türseitige Sende/Empfangseinheit aufweist oder mit dieser verbunden ist, und einen dem Türschloss zugeordneten Funkschlüssel, welcher eine schlüsselseitige Sende/Empfangseinheit aufweist, wobei die türseitige Sende/Empfangseinheit und die schlüsselseitige Sende/Empfangseinheit für eine Funkkommunikation ausgebildet sind.

Systeme der eingangs genannten Art sind grundsätzlich bekannt. Insbesondere ist es heutzutage Standard, Kraftfahrzeuge mit Funkschlüsseln zur Entriegelung bzw. Verriegelung der Türschlösser aus der Ferne auszustatten. Zum Schutz vor Diebstahl ist die Reichweite der Funkverbindung zwischen Kraftfahrzeug und Funkschlüssel üblicherweise begrenzt. Allerdings sind Vorrichtungen entwickelt worden, mit denen die von einem Funkschlüssel ausgesandten Funksignale so gestört werden können, dass eine Verriegelung der Türschlösser verhindert wird, oder mit denen die von einem Funkschlüssel ausgesandten Funksignale abgefangen und über eine Entfernung übertragen werden können, welche die normale Reichweite der Funkverbindung zwischen Kraftfahrzeug und Funkschlüssel weit übersteigt. Eine zusätzliche Sicherheitsmaßnahme sieht daher vor, die Signalstärke des von dem Funkschlüssel ausgesandten Funksignals türseitig zu erfassen und hierdurch auf die Distanz zwischen Funkschlüssel und Kraftfahrzeug zu schließen, um eine Entriegelung der Türschlösser nur dann zuzulassen, wenn sich der Funkschlüssel nahe genug am Kraftfahrzeug befindet. Auch zur Überwindung dieser Sicherheitsmaßnahme sind jedoch Vorrichtungen entwickelt worden, mit welchen sich die Signalstärke eines von einem Funkschlüssel abgefangenen Funksignals künstlich erhöhen lässt, um die Nähe des Funkschlüssels zu dem Kraftfahrzeug zu simulieren.

Aus der DE 100 64 141 A1 ist ein Verfahren zum Nachweis einer Berechtigung für den Zugang zu einem Kraftfahrzeug bekannt, wobei eine Positionsbestimmung eines Codegebers auf Basis eines Frage-Antwort-Dialogs zwischen einem Steuergerät im Fahrzeug und dem Codegeber durchgeführt wird und abhängig von der Position des Codegebers verschiedene Steuerbefehle für fest vorgegebene Positionsbereiche ausgeführt werden.

Die DE 10 2015 213 934 A1 offenbart ein Verfahren und System zum Ausschalten der Aktivierbarkeit einer Funktion, beispielsweise einer Entriegelungsfunktion, mittels Funk für ein Fahrzeug.

Die DE 2015 222 235 A1 offenbart eine Vorrichtung und ein Verfahren zum Aktivieren und Deaktivieren eines Kraftfahrzeugs, wobei ein passiver Sendeempfänger eine Schalteinrichtung zum elektrischen Verbinden einer Antennenstruktur und einer Generatorschaltung aufweist, sodass ein charakteristisches Identifikationssignal vom passiven Sendeempfänger auf eine manuelle Betätigung hin ausgesendet wird.

Aus der US 2015/0048927 A1 ist ein passives schlüsselloses Zugangssystem bekannt, das mittels eines Smartphones gesteuert wird. Die Bestimmung eines Auslöseabstands, bei dem ein Schließmechanismus des Zugangssystems aktiviert wird, erfolgt mittels Auswertung einer Funksignalstärke durch das Smartphone.

Eine Aufgabe der Erfindung besteht darin, ein System der eingangs genannten Art zu schaffen, welches sich durch einen besseren Diebstahlschutz und einen höheren Bedienkomfort auszeichnet.

Die Aufgabe wird durch ein System mit den Merkmalen des Anspruchs 1 gelöst. Erfindungsgemäß ist mittels der türseitigen Sende/Empfangseinheit die Laufzeit eines von der türseitigen Sende/Empfangseinheit ausgesandten und von der schlüsselseitigen Sende/Empfangseinheit reflektierten Funksignals ermittelbar oder mittels der schlüsselseitigen Sende/Empfangseinheit die Laufzeit eines von der schlüsselseitigen Sende/Empfangseinheit ausgesandten und von der türseitigen Sende/Empfangseinheit reflektierten Funksignals ermittelbar.

Der Erfindung liegt der allgemeine Gedanke zugrunde, die Funktionalität des Schlüssels zwar von der Entfernung zwischen der schlüsselseitigen Sende/Empfangseinheit und der türseitigen Sende/Empfangseinheit, insbesondere von der Entfernung zwischen Funkschlüssel und Fahrzeug, abhängig zu machen, diese Entfernung aber nicht anhand der maximalen Reichweite der Funkverbindung oder der Signalstärke des durch die türseitige Sende/Empfangseinheit empfangenen Funksignals zu bemessen, sondern stattdessen die Distanz zwischen der schlüsselseitigen Sende/Empfangseinheit und der türseitigen Sende/Empfangseinheit aus der Laufzeit zu ermitteln, welche ein von der einen Sende/Empfangseinheit ausgesandtes Funksignal benötigt, um die Strecke zu der anderen Sende/Empfangseinheit und wieder zurück zurückzulegen. Die die Laufzeit ermittelnde Sende/Empfangseinheit ist hierfür mit einem geeigneten Modul zur Messung der Laufzeit versehen oder verbunden.

Es hat sich herausgestellt, dass es unmöglich oder, wenn überhaupt, nur mit erheblichem Aufwand möglich ist, die Laufzeit eines von einer weit entfernten Sende/Empfangseinheit reflektierten und unberechtigterweise abgefangenen Funksignals künstlich so zu reduzieren, dass eine Nähe zwischen den kommunizierenden Sende/Empfangseinheiten simuliert wird, die ausreicht, um eine gewünschte Funktion an dem Fahrzeug auszulösen. Eine unberechtigte Auslösung der Funktion, beispielsweise Entriegelung des Türschlosses, ist also praktisch ausgeschlossen, wodurch der Diebstahlschutz deutlich verbessert ist.

In diesem Kontext ist unter einer Tür eines Fahrzeugs nicht nur eine herkömmliche schwenkbare Seitentür, sondern auch eine Flügeltür, eine Schiebetür, eine Hecktür, eine Heckklappe, einen Kofferraumdeckel oder eine Frontklappe zu verstehen.

Des Weiteren kann die schlüsselseitige Sende/Empfangseinheit in das Gehäuse eines herkömmlichen Funkschlüssels eines Fahrzeugs, d.h. eines Autoschlüssels mit Fernbedienung, integriert sein.

Erfindungsgemäß aktiviert die die Laufzeit eines reflektierten Funksignals ermittelnde Sende/Empfangseinheit eine Komfortfunktion, wenn die Laufzeit des reflektierten Funksignals einen vorbestimmten ersten Schwellenwert unterschreitet, mit anderen Worten also wenn sich die schlüsselseitige Sende/Empfangseinheit unterhalb einer vorbestimmten Entfernung zur türseitigen Sende/Empfangseinheit befindet, oder wenn die Laufzeit des reflektierten Funksignals einen vorbestimmten zweiten Schwellenwert überschreitet, d.h. der Abstand zwischen den Sende/Empfangseinheiten einen vorbestimmten Wert übersteigt. Durch die automatische Aktivierung der Komfortfunktion wird der Bedienkomfort deutlich erhöht.

Die Aktivierung der Komfortfunktion kann beispielsweise umfassen, dass die Tür automatisch geöffnet wird. Nähert sich ein den Funkschlüssel mit sich führender Benutzer beispielsweise nach einem Einkauf mit Einkaufstaschen beladen dem Fahrzeug, so geht die Tür von alleine auf, ohne dass der Benutzer eine zusätzliche Handlung vollführen muss, wie beispielsweise das Drücken eines Knopfes am Funkschlüssel und/oder das Bewegen seines Fußes durch den Detektionsbereich eines Sensors.

Alternativ oder zusätzlich kann die Aktivierung der Komfortfunktion umfassen, dass ein Fahrzeugdach automatisch geöffnet wird, ein versenkter Türgriff herausgefahren wird und/oder ein Signalgeber, beispielsweise ein akustischer und/oder optischer Signalgeber, insbesondere wenigstens ein Licht, zur Positionsbestimmung eingeschaltet wird. Letzteres erleichtert dem Benutzer die Orientierung und das Finden des Fahrzeugs, beispielsweise wenn dieses auf einem großen Parkplatz abgestellt ist. Auch kann die Aktivierung der Komfortfunktion das Einschalten einer Willkommensbeleuchtung, einer Lüftung, einer Sitzheizung und/oder einer Standheizung umfassen.

Ferner kann die Komfortfunktion umfassen, dass die Tür automatisch geschlossen und verriegelt wird. Dies kann beispielsweise für einen den Funkschlüssel mit sich führenden Paketzusteller bequem sein, welcher mit Paketen beladen aus seinem Fahrzeug aussteigt und sich darauf verlassen kann, dass die für das Aussteigen geöffnete Tür automatisch geschlossen und verriegelt wird, sobald er sich um eine vorbestimmte Distanz von dem Fahrzeug entfernt hat. Auch ein automatisches Schließen eines Fahrzeugdachs, ein automatisches Einfahren eines Türaußengriffs und/oder eine automatische Betätigung eines Fensterhebers, beispielsweise zum Schließen eines Fensters, sind als Komfortfunktionen denkbar.

Der Einfachheit halber können der erste Schwellenwert und der zweite Schwellenwert gleich groß sein. Auf diese Weise erfolgen die Aktivierung und Deaktivierung bzw. Rückstellung der Komfortfunktion jeweils bei gleichem Abstand der schlüsselseitigen Sende/Empfangseinheit zur türseitigen Sende/Empfangseinheit. Beispielsweise kann ein automatisches Öffnen bzw. Schließen der Tür ausgelöst werden, wenn sich ein den Funkschlüssel mit sich führender Benutzer dem Fahrzeug auf weniger als 3 m nähert oder um mehr als 3 m von diesem entfernt.

Grundsätzlich können der erste Schwellenwert und der zweite Schwellenwert aber auch unterschiedlich groß sein. Beispielsweise kann ein automatisches Öffnen der Tür ausgelöst werden, wenn sich ein den Funkschlüssel mit sich führender Benutzer dem Fahrzeug auf weniger als 5 m nähert, und ein automatisches Schließen der Tür ausgelöst werden, wenn sich der Benutzer um mehr als 2 m von dem Fahrzeug entfernt.

Darüber hinaus ist es denkbar, verschiedene Schwellenwerte für unterschiedliche Komfortfunktionen vorzusehen. Insbesondere ist es vorteilhaft, wenn ein Signalgeber zur Positionsbestimmung, beispielsweise ein Licht, bereits aktiviert wird, wenn sich ein den Funkschlüssel mit sich führender und sich dem Fahrzeug nähernder Benutzer noch in einer Entfernung von z.B. 10-20 m zum Fahrzeug befindet, und eine Willkommensbeleuchtung eingeschaltet wird, wenn der Abstand zwischen Funkschlüssel und Fahrzeug 5-10 m beträgt, während die Tür erst dann automatisch entriegelt und geöffnet wird, wenn der Abstand zwischen Funkschlüssel und Fahrzeug 3 m unterschreitet. Es versteht sich, dass die maximale Reichweite der Funkverbindung entsprechend ausgelegt sein muss und idealerweise 20 m nicht unterschreiten sollte.

Erfindungsgemäß ist der oder jeder Schwellenwert türseitig und/oder schlüsselseitig durch einen Benutzer individuell einstellbar. Dies trägt zu einem noch höheren Bedienkomfort bei, da der Benutzer das System nach seinen Wünschen konfigurieren kann, insbesondere die Abstände des Funkschlüssels zum Fahrzeug wählen kann, bei welchen Komfortfunktionen aktiviert oder deaktiviert bzw. zurückgestellt werden. Dabei kann die türseitige Einstellung des oder jeden Schwellenwerts über eine im Fahrzeug vorgesehene Schnittstelle erfolgen, beispielsweise einen Touchscreen. Entsprechend kann auch der Funkschlüssel eine geeignete Schnittstelle aufweisen, wie zum Beispiel einen Touchscreen.

Zur noch weiteren Erhöhung des Diebstahlschutzes ist eine Komfortfunktion nur während eines vorbestimmten Zeitfensters aktivierbar oder deaktivierbar bzw. zu rückstellbar. Beispielsweise ist es denkbar, ein automatisches Öffnen bzw. Schließen der Tür nur während vorbestimmter Tages- oder Nachtzeiten zuzulassen.

Eine solche zeitliche Beschränkung einer Komfortfunktion lässt sich beispielsweise dadurch realisieren, dass deren Aktivierung oder Deaktivierung bzw. Rückstellung während bestimmter Zeiten blockiert wird oder dass die türseitige Sende/Empfangseinheit Funksignale nur während eines vorbestimmten Zeitfensters aussendet.

Zur noch weiteren Erhöhung des Bedienkomforts trägt bei, wenn - ähnlich wie die Schwellenwerte - auch das Zeitfenster türseitig und/oder schlüsselseitig durch einen Benutzer individuell einstellbar ist.

Zu einer besonders zuverlässigen Funktion des Systems trägt außerdem bei, wenn die die Laufzeit eines reflektierten Funksignals ermittelnde Sende/ Empfangseinheit wiederholt, insbesondere in regelmäßigen Zeitabständen, Funksignale aussendet und detektiert, ob diese von einer schlüsselseitigen Sende/Empfangseinheit reflektiert werden.

Bevorzugt reflektiert die reflektierende Sende/Empfangseinheit ein von der die Laufzeit ermittelnde Sende/Empfangseinheit empfangenes Funksignal stets automatisch an diese zurück.

Gemäß einer weiteren Ausführungsform reflektiert die reflektierende Sende/Empfangseinheit ein von der die Laufzeit ermittelnden Sende/Empfangseinheit empfangenes Funksignal nur dann an diese zurück, wenn ein Benutzer zuvor eine vorbestimmte Freigabehandlung vorgenommen hat. Beispielsweise kann der Benutzer den Funkschlüssel als reflektierende Sende/Empfangseinheit gewissermaßen scharf schalten, um später eine gewünschte Komfortfunktion zu nutzen. Der Funkschlüssel wirkt in diesem Fall also wie ein Funktionsspeicher, in welchem die Aktivierung der Komfortfunktionen abgespeichert ist, um zu einem späteren Zeitpunkt abgerufen zu werden, nämlich wenn sich der Funkschlüssel in ausreichender Nähe zu dem Fahrzeug befindet. Bei der Freigabehandlung kann es sich beispielsweise um ein ein- oder mehrmaliges Drücken einer hierfür vorgesehenen Taste des Funkschlüssels handeln.

Zur Verbesserung des Diebstahlschutzes trägt außerdem bei, wenn das von der die Laufzeit ermittelnden Sende/Empfangseinheit ausgesandte Funksignal ein verschlüsseltes Digitalsignal ist.

Der Diebstahlschutz lässt sich noch weiter verbessern, wenn die reflektierende Sende/Empfangseinheit ein von der die Laufzeit ermittelnden Sende/Empfangseinheit empfangenes Funksignal vor dem Zurücksenden an die Sende/Empfangseinheit modifiziert, insbesondere mit einem Authentisierungscode versieht.

Dem Diebstahlschutz ist es außerdem zuträglich, wenn die türseitige Sende/Empfangseinheit als die Laufzeit ermittelnde Sende/Empfangseinheit ein automatisches Schließen der Tür und/oder Verriegeln des Türschlosses veranlasst, sollte sie kein reflektiertes Funksignal empfangen.

Nachfolgend wird die Erfindung rein beispielhaft anhand einer möglichen Ausführungsform unter Bezugnahme auf die beigefügte Zeichnung beschrieben. Es zeigen:

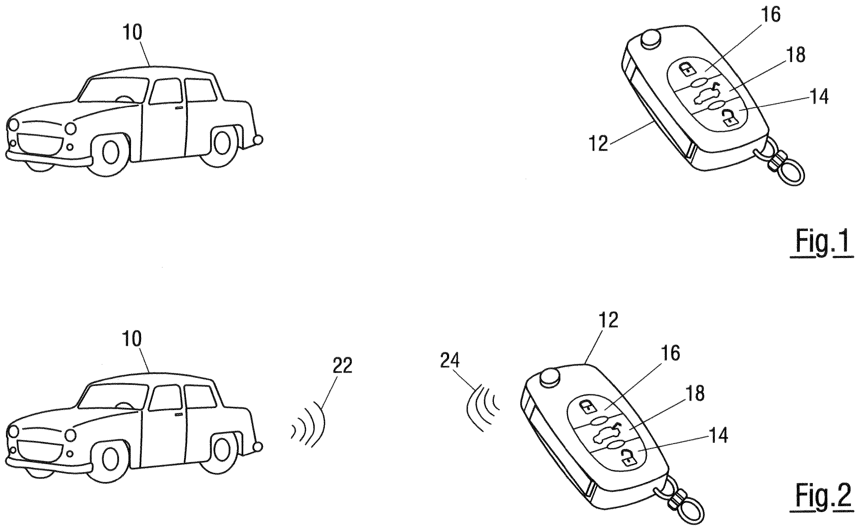

- Fig. 1: ein Fahrzeug und einen dem Fahrzeug zugeordneten Funkschlüssel, welcher sich außerhalb der Reichweite einer Funkverbindung zwischen Fahrzeug und Funkschlüssel befindet;
- Fig. 2: das Fahrzeug und den Funkschlüssel von Fig. 1, wobei sich der Funkschlüssel innerhalb der Reichweite der Funkverbindung zwischen Fahrzeug und Funkschlüssel, aber noch in großer Entfernung zu dem Fahrzeug befindet;

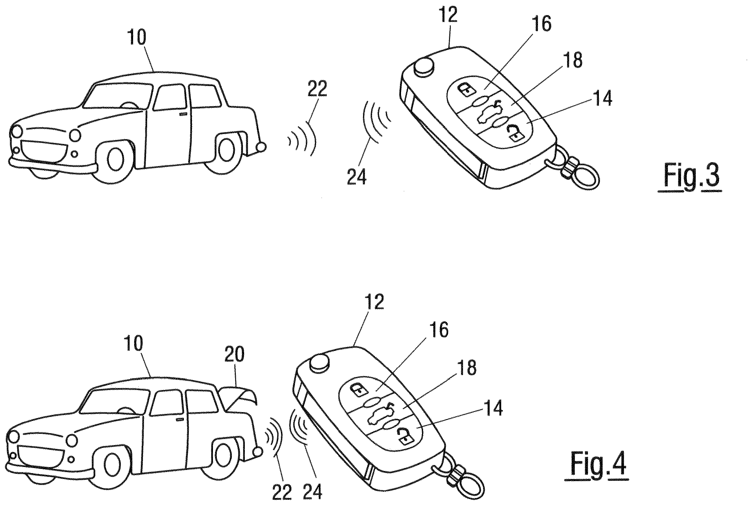

- Fig. 3: das Fahrzeug und den Funkschlüssel von Fig. 1, wobei sich der Funkschlüssel innerhalb der Reichweite der Funkverbindung zwischen Fahrzeug und Funkschlüssel, aber in mittlerer Entfernung zu dem Fahrzeug befindet;
- Fig. 4: das Fahrzeug und den Funkschlüssel von Fig. 1, wobei sich der Funkschlüssel innerhalb der Reichweite der Funkverbindung zwischen Fahrzeug und Funkschlüssel in so geringer Entfernung zu dem Fahrzeug befindet, dass eine Heckklappe des Fahrzeugs automatisch geöffnet wird.

In den Figuren ist ein Fahrzeug 10 dargestellt, welchem ein Funkschlüssel 12 zugeordnet ist, der in an sich bekannter Weise mittels Funk mit einem Türsteuerungsmodul, hier in Form einer Zentralverriegelung, des Fahrzeugs 10 kommunizieren kann. Der Funkschlüssel 12 weist eine erste Taste 14 auf, bei deren Betätigung der Funkschlüssel 12 ein Entriegelungssignal an die Zentralverriegelung des Fahrzeugs 10 sendet, sowie eine zweite Taste 16, bei deren Betätigung der Funkschlüssel 12 ein Verriegelungssignal an die Zentralverriegelung des Fahrzeugs 10 sendet.

Außerdem weist der Funkschlüssel 12 eine dritte Taste 18 auf, bei deren einmaliger Betätigung der Funkschlüssel 12 ein Signal an die Zentralverriegelung sendet, welches eine Entriegelung und Öffnung ausschließlich einer Heckklappe 20 des Fahrzeugs 10 bewirkt, sofern sich der Funkschlüssel 12 innerhalb der Reichweite der Funkverbindung zwischen Fahrzeug 10 und Funkschlüssel 12 befindet. Eine mehrmalige, beispielsweise dreimalige, Betätigung der dritten Taste 18 aktiviert hingegen eine Sende/Empfangseinheit des Funkschlüssels 12, d.h. eine schlüsselfertige Sender/Empfangseinheit, und zwar auch dann, wenn sich der Funkschlüssel 12 außerhalb der Reichweite der Funkverbindung befindet.

Das Fahrzeug 10 umfasst eine korrespondierende fahrzeugseitige Sende/Empfangseinheit, in diesem Kontext auch als türseitige Sende/Empfangseinheit bezeichnet, welche im vorliegenden Ausführungsbeispiel in die Zentralverriegelung integriert ist, grundsätzlich aber auch von dieser getrennt ausgebildet sein kann. Die türseitige Sende/Empfangseinheit ist entweder indirekt über die Zentralverriegelung oder direkt mit einem, beispielsweise elektromotorischen, Antrieb zum Entriegeln und Öffnen der Heckklappe 20 verbunden.

Die fahrzeugseitige Sende/Empfangseinheit weist mehrere, an verschiedenen Stellen des Fahrzeugs 10 angeordnete Antennen auf und sendet über diese in regelmäßigen zeitlichen Abständen Funksignale 22 in die Umgebung des Fahrzeugs 10 aus. Bei diesen Funksignalen 22 handelt es sich um verschlüsselte Digitalsignale.

Die von der fahrzeugseitigen Sende/Empfangseinheit ausgesandten Funksignale 22 werden von der aktivierten schlüsselseitigen Sende/Empfangseinheit empfangen, sobald sich der Funkschlüssel 12 innerhalb der Reichweite der Funkverbindung zwischen Fahrzeug 10 und Funkschlüssel 12 befindet. Die empfangenen Funksignale 22 werden durch die schlüsselseitige Sender/Empfangseinheit mit einem Authentisierungscode versehen und als reflektierte Funksignale 24 an die fahrzeugseitige Sende/Empfangseinheit zurückgesandt. Die von der fahrzeugseitigen Sende/Empfangseinheit ausgesandten Funksignale 22 werden gewissermaßen also von dem Funkschlüssel 12 zurückgeworfen.

In der fahrzeugseitigen Sende/Empfangseinheit werden die Authentisierungscodes der reflektierten Funksignale 24 überprüft. Außerdem werden die Laufzeiten der reflektierten Funksignale 24 ermittelt, d.h. also die Zeiten gemessen, die von der Ausstrahlung der Funksignale 22 bis zum Empfang der entsprechenden reflektierten Funksignale 24 vergehen. Die fahrzeugseitige Sende/Empfangseinheit ist hierfür mit einem geeigneten Messmodul versehen oder verbunden. Da sich die Funksignale 22, 24 grundsätzlich mit Lichtgeschwindigkeit ausbreiten, lässt sich aus der Laufzeit eines Funksignals 22, 24 der Abstand zwischen der fahrzeugseitigen Sende/Empfangseinheit und der schlüsselseitigen Sende/Empfangseinheit berechnen, d.h. also auf die Entfernung des Funkschlüssels 12 von dem Fahrzeug 10 zurückschließen.

Nähert sich der Funkschlüssel 12 dem Fahrzeug 10, so nehmen die Laufzeiten der reflektierten Funksignale 24 ab. Sobald die Laufzeit eines reflektierten Funksignals 24 einen vorbestimmten ersten Schwellenwert unterschreitet, d.h. also der Funkschlüssel 12 eine vorbestimmte Entfernung zu dem Fahrzeug 10 unterschreitet, und die Authentifizierung des reflektierten Funksignals 24 positiv ausfällt, aktiviert die fahrzeugseitige Sende/Empfangseinheit den Antrieb der Heckklappe 20, um diese automatisch zu entriegeln und zu öffnen.

Entfernt sich der Funkschlüssel 12 anschließend wieder von dem Fahrzeug 10, nehmen die Laufzeiten der reflektierten Funksignale 24 wieder zu. Sobald die Laufzeit eines reflektierten Funksignals 24 einen vorbestimmten zweiten Schwellenwert überschreitet, d.h. also der Funkschlüssel 12 eine vorbestimmte Entfernung zu dem Fahrzeug 10 überschreitet, steuert die fahrzeugseitige Sende/Empfangseinheit den Antrieb der Heckklappe 20 derart an, dass diese wieder geschlossen und verriegelt wird.

Grundsätzlich können der erste Schwellenwert und der zweite Schwellenwert gleich gewählt sein. In der Praxis erweist es sich jedoch als vorteilhaft, wenn das automatische Öffnen der Heckklappe 20 bereits initiiert wird, wenn sich ein den Funkschlüssel 12 mit sich führender Benutzer dem Fahrzeug 10 beispielsweise auf 3 m genähert hat, wohingegen das automatische Schließen der Heckklappe 20 gestartet werden kann, wenn der Funkschlüssel 12 einen Abstand von 1,5 m zu der Heckklappe 20 erreicht.

Idealerweise lassen sich die Schwellenwerte, bei denen das automatische Öffnen bzw. Schließen der Heckklappe 20 ausgelöst wird, durch einen Benutzer individuell einstellen, beispielsweise mittels eines in dem Fahrzeug 10 vorgesehenen Touchscreens, über welchen die entsprechenden Parameter in die Zentralverriegelung und somit letztlich in die fahrzeugseitige Sende/Empfangseinheit eingegeben werden können.

### Bezugszeichenliste

- 10: Fahrzeug
- 12: Funkschlüssel
- 14: erste Taste
- 16: zweite Taste
- 18: dritte Taste
- 20: Heckklappe
- 22: ausgesandtes Funksignal
- 24: reflektiertes Funksignal

## Patentansprüche

1. System umfassend
eine Tür (20), insbesondere eines Fahrzeugs (10), mit einem Türschloss,
ein Türsteuerungsmodul, welches eine türseitige Sende/Empfangseinheit aufweist oder mit dieser verbunden ist, und
einen dem Türschloss zugeordneten Funkschlüssel (12), welcher eine schlüsselseitige Sende/Empfangseinheit aufweist,
wobei die türseitige Sende/Empfangseinheit und die schlüsselseitige Sende/Empfangseinheit für eine Funkkommunikation ausgebildet sind und
mittels der türseitigen Sende/Empfangseinheit die Laufzeit eines von der türseitigen Sende/Empfangseinheit ausgesandten und von der schlüsselseitigen Sende/Empfangseinheit reflektierten Funksignals (22, 24) ermittelbar ist oder
mittels der schlüsselseitigen Sende/Empfangseinheit die Laufzeit eines von der schlüsselseitigen Sende/Empfangseinheit ausgesandten und von der türseitigen Sende/Empfangseinheit reflektierten Funksignals (22, 24) ermittelbar ist,
wobei die die Laufzeit eines reflektierten Funksignals (24) ermittelnde Sende/Empfangseinheit dazu ausgebildet ist, Funksignale (22) nur während eines vorbestimmten Zeitfensters auszusenden, und
die die Laufzeit eines reflektierten Funksignals (24) ermittelnde Sende/Empfangseinheit dazu ausgebildet ist, eine Komfortfunktion zu aktivieren, wenn die Laufzeit des reflektierten Funksignals (24) einen vorbestimmten ersten Schwellenwert unterschreitet oder wenn die Laufzeit des reflektierten Funksignals (24) einen vorbestimmten zweiten Schwellenwert überschreitet,
**dadurch gekennzeichnet , dass**
der oder jeder Schwellenwert türseitig und/oder schlüsselseitig durch einen Benutzer individuell einstellbar ist.

2. System nach Anspruch 1,
**dadurch gekennzeichnet , dass**
die Aktivierung der Komfortfunktion umfasst, dass die Tür automatisch geöffnet oder automatisch geschlossen und verriegelt wird; ein Fahrzeugverdeck automatisch geöffnet oder geschlossen wird; ein versenkter Türgriff herausgefahren oder eingefahren wird; ein Signalgeber, beispielsweise ein akustischer und/oder optischer Signalgeber, insbesondere wenigstens ein Licht, zur Positionsbestimmung eingeschaltet wird; eine Willkommensbeleuchtung eingeschaltet wird; ein Fensterheber betätigt wird; und/oder eine Lüftung, Sitzheizung und/oder Standheizung eingeschaltet wird .

3. System nach Anspruch 1 oder 2,
**dadurch gekennzeichnet , dass**
der erste Schwellenwert und der zweite Schwellenwert gleich groß sind.

4. System nach Anspruch 1 oder 2,
**dadurch gekennzeichnet , dass**
verschiedene Schwellenwerte für unterschiedliche Komfortfunktionen vorgesehen sind.

5. System nach zumindest einem der vorstehenden Ansprüche,
**dadurch gekennzeichnet , dass**
eine Komfortfunktion nur während des vorbestimmten Zeitfensters aktivierbar ist.

6. System nach zumindest einem der vorstehenden Ansprüche,
**dadurch gekennzeichnet , dass**
das Zeitfenster türseitig und/oder schlüsselseitig durch einen Benutzer individuell einstellbar ist.

7. System nach zumindest einem der vorstehenden Ansprüche,
**dadurch gekennzeichnet , dass**
die die Laufzeit eines reflektierten Funksignals (24) ermittelnde Sende/Empfangseinheit dazu ausgebildet ist, wiederholt, insbesondere in regelmäßigen Zeitabständen, Funksignale (22) auszusenden und zu detektieren, ob diese von einer schlüsselseitigen Sende/Empfangseinheit reflektiert werden.

8. System nach zumindest einem der vorstehenden Ansprüche,
**dadurch gekennzeichnet , dass**
die reflektierende Sende/Empfangseinheit dazu ausgebildet ist, ein von der die Laufzeit eines reflektierten Funksignals (24) ermittelnden Sende/Empfangseinheit empfangenes Funksignal (22) stets automatisch an diese zurück zu reflektieren.

9. System nach zumindest einem der Ansprüche 1 bis 7,
**dadurch gekennzeichnet , dass**
die reflektierende Sende/Empfangseinheit dazu ausgebildet ist, ein von der die Laufzeit eines reflektierten Funksignals (24) ermittelnden Sende/Empfangseinheit empfangenes Funksignal (22) nur dann an diese zurück zu reflektieren, wenn ein Benutzer zuvor eine vorbestimmte Freigabehandlung vorgenommen hat.

10. System nach zumindest einem der vorstehenden Ansprüche,
**dadurch gekennzeichnet , dass**
das von der die Laufzeit eines reflektierten Funksignals (24) ermittelnden Sende/Empfangseinheit ausgesandte Funksignal (22) ein verschlüsseltes Digitalsignal ist.

11. System nach zumindest einem der vorstehenden Ansprüche,
**dadurch gekennzeichnet , dass**
die reflektierende Sende/Empfangseinheit dazu ausgebildet ist, ein von der die Laufzeit eines reflektierten Funksignals (24) ermittelnden Sende/Empfangseinheit empfangenes Funksignal (22) vor dem Zurücksenden an diese zu modifizieren, insbesondere mit einem Authentisierungscode zu versehen.

12. System nach zumindest einem der vorstehenden Ansprüche,
**dadurch gekennzeichnet, dass**
die türseitige Sende/Empfangseinheit dazu ausgebildet ist, ein automatisches Schließen der Tür und/oder Verriegeln des Türschlosses zu veranlassen, wenn sie kein reflektiertes Funksignal (24) empfängt.

## Claims

1. A system comprising
a door (20), in particular of a vehicle (10), having a door lock;
a door control module which has or is connected to a transmission/reception unit at the door side; and
a radio key (12) which is associated with the door lock and which has a transmission/reception unit at the key side,
wherein the transmission/reception unit at the door side and the transmission/reception unit at the key side are configured for radio communication and
the time of flight of a radio signal (22, 24) transmitted by the transmission/reception unit at the door side and reflected by the transmission/reception unit at the key side can be determined by means of the transmission/reception unit at the door side or
the time of flight of a radio signal (22, 24) transmitted by the transmission/reception unit at the key side and reflected by the transmission/reception unit at the door side can be determined by means of the transmission/reception unit at the key side,
wherein the transmission/reception unit determining the time of flight of a reflected radio signal (24) is configured to transmit radio signals (22) only during a predefined time window, and
the transmission/reception unit determining the time of flight of a reflected radio signal (24) is configured to activate a comfort function when the time of flight of the reflected radio signal (24) falls below a predefined first threshold value or when the time of flight of the reflected radio signal (24) exceeds a predefined second threshold value,
**characterized in that**
the or each threshold value can be individually set by a user at the door side and/or at the key side.

2. A system in accordance with claim 1,
**characterized in that**
the activation of the comfort function comprises the door being automatically opened or automatically closed and locked; a vehicle top being automatically opened or closed; a retracted door handle being traveled out or traveled in; a signal generator, for example an acoustic and/or visual signal generator, in particular at least one light, being switched on for position determination; a welcome lighting being switched on; a window regulator being actuated; and/or a ventilation, seat heating and/or independent vehicle heater being switched on.

3. A system in accordance with claim 1 or claim 2,
**characterized in that**
the first threshold value and the second threshold value are the same.

4. A system in accordance with claim 1 or claim 2,
**characterized in that**
different threshold values are provided for different comfort functions.

5. A system in accordance with at least one of the preceding claims,
**characterized in that**
a comfort function can only be activated during the predefined time window.

6. A system in accordance with at least one of the preceding claims,
**characterized in that**
the time window can be individually set by a user at the door side and/or at the key side.

7. A system in accordance with at least one of the preceding claims,
**characterized in that**
the transmission/reception unit determining the time of flight of a reflected radio signal (24) is configured to transmit radio signals (22) repeatedly, in particular at regular time intervals, and to detect whether they are reflected by a transmission/reception unit at the key side.

8. A system in accordance with at least one of the preceding claims,
**characterized in that**
the reflecting transmission/reception unit is configured to always automatically reflect a radio signal (22) received from the transmission/reception unit determining the time of flight of a reflected radio signal (24) back to said transmission/reception unit.

9. A system in accordance with at least one of the claims 1 to 7,
**characterized in that**
the reflecting transmission/reception unit is configured to reflect a radio signal (22) received from the transmission/reception unit determining the time of flight of a reflected radio signal (24) back to said transmission/reception unit only when a user has previously carried out a predefined release action.

10. A system in accordance with at least one of the preceding claims,
**characterized in that**
the radio signal (22) transmitted by the transmission/reception unit determining the time of flight of a reflected radio signal (24) is an encrypted digital signal.

11. A system in accordance with at least one of the preceding claims,
**characterized in that**
the reflecting transmission/reception unit is configured to modify a radio signal (22) received from the transmission/reception unit determining the time of flight of a reflected radio signal (24), in particular to provide it with an authentication code, before transmitting said radio signal (22) back to said transmission/reception unit.

12. A system in accordance with at least one of the preceding claims,
**characterized in that**
the transmission/reception unit at the door side is configured to initiate an automatic closing of the door and/or locking of the door lock if it does not receive a reflected radio signal (24).

## Revendications

1. Système comportant
une porte (20), en particulier d'un véhicule (10), qui comprend une serrure de porte,
un module de commande de porte, qui comprend une unité d'émission/réception côté porte ou qui est relié à celle-ci, et
une clé radio (12) associée à la serrure de porte, laquelle comprend une unité d'émission/réception côté clé,
dans lequel
l'unité d'émission/réception côté porte et l'unité d'émission/réception côté clé sont conçues pour une communication radio et
le temps de parcours d'un signal radio (22, 24) émis par l'unité d'émission/réception côté porte et réfléchi par l'unité d'émission/réception côté clé peut être déterminé au moyen de l'unité d'émission/réception côté porte, ou
le temps de parcours d'un signal radio (22, 24) émis par l'unité d'émission/réception côté clé et réfléchi par l'unité d'émission/réception côté porte peut être déterminé au moyen de l'unité d'émission/réception côté clé, l'unité d'émission/réception déterminant le temps de parcours d'un signal radio réfléchi (24) n'émet des signaux radio (22) que pendant une fenêtre de temps prédéfinie, et
l'unité d'émission/réception déterminant le temps de parcours d'un signal radio réfléchi (24) est réalisée pour activer une fonction de confort lorsque le temps de parcours du signal radio réfléchi (24) dépasse vers le bas une première valeur seuil prédéfinie ou lorsque le temps de parcours du signal radio réfléchi (24) dépasse vers le haut une deuxième valeur seuil prédéfinie,
**caractérisé en ce que**
la ou chaque valeur seuil est réglable individuellement par un utilisateur du côté porte et/ou du côté clé.

2. Système selon la revendication 1,
**caractérisé en ce que**
l'activation de la fonction de confort comprend l'ouverture automatique de la porte ou sa fermeture et son verrouillage automatiques ; l'ouverture ou la fermeture automatique d'une capote de véhicule ; la sortie ou la rentrée d'une poignée de porte encastrée ; l'allumage d'un émetteur de signaux, par exemple d'un émetteur de signaux acoustiques et/ou optiques, en particulier d'au moins une lumière, pour déterminer la position ; l'allumage d'un éclairage de bienvenue ; l'actionnement d'un lève-vitre ; et/ou l'allumage d'une ventilation, d'un chauffage de siège et/ou d'un chauffage auxiliaire.

3. Système selon la revendication 1 ou 2,
**caractérisé en ce que**
la première valeur seuil et la deuxième valeur seuil sont égales.

4. Système selon la revendication 1 ou 2,
**caractérisé en ce que**
différentes valeurs seuils sont prévues pour différentes fonctions de confort.

5. Système selon l'une au moins des revendications précédentes,
**caractérisé en ce que**
une fonction de confort ne peut être activée que pendant une fenêtre de temps prédéfinie.

6. Système selon l'une au moins des revendications précédentes,
**caractérisé en ce que**
la fenêtre de temps est réglable individuellement par un utilisateur du côté porte et/ou du côté clé.

7. Système selon l'une au moins des revendications précédentes,
**caractérisé en ce que**
l'unité d'émission/réception qui détermine le temps de parcours d'un signal radio réfléchi (24) est réalisée pour émette des signaux radio (22) de manière répétée, en particulier à intervalles réguliers, et pour détecter si ceux-ci sont réfléchis par une unité d'émission/réception côté clé.

8. Système selon l'une au moins des revendications précédentes,
**caractérisé en ce que**
l'unité d'émission/réception réfléchissante est réalisée pour renvoyer un signal radio (22), reçu par l'unité d'émission/réception déterminant le temps de parcours d'un signal radio réfléchi (24), toujours automatiquement vers celle-ci.

9. Système selon l'une au moins des revendications 1 à 7,
**caractérisé en ce que**
l'unité d'émission/réception réfléchissante est réalisée pour ne renvoyer un signal radio (22), reçu par l'unité d'émission/réception déterminant le temps de parcours d'un signal radio réfléchi (24), vers celle-ci que si un utilisateur a préalablement effectué une action de validation prédéfinie.

10. Système selon l'une au moins des revendications précédentes,
**caractérisé en ce que**
le signal radio (22), émis par l'unité d'émission/réception déterminant le temps de parcours d'un signal radio réfléchi (24), est un signal numérique crypté.

11. Système selon l'une au moins des revendications précédentes,
**caractérisé en ce que**
l'unité d'émission/réception réfléchissante est réalisée pour modifier un signal radio (22), reçu par l'unité d'émission/réception déterminant le temps de parcours d'un signal radio réfléchi (24), avant de le lui renvoyer, en particulier en lui attribuant un code d'authentification.

12. Système selon l'une au moins des revendications précédentes,
**caractérisé en ce que**
l'unité d'émission/réception côté porte est réalisée pour provoquer la fermeture automatique de la porte et/ou le verrouillage automatique de la serrure de porte lorsqu'elle ne reçoit pas de signal radio réfléchi (24).
